# FASCICULE DE BREVET EUROPEEN

(11) **EP 3 966 371 B1**
(45) Date de publication et mention de la délivrance du brevet: **20.08.2025**
(21) Numéro de dépôt: 20722615.0
(22) Date de dépôt: 07.05.2020
(51) Int. Cl.: D01F 9/16, D21H 13/50, D01F 13/02, C08J 11/06, C08J 5/04

(54) **PROCEDE DE FABRICATION D'UNE FIBRE DE CARBONE A PARTIR D'UN PRODUIT EN PAPIER**
VERFAHREN ZUR HERSTELLUNG EINER KOHLEFASER AUS EINEM PAPIERPRODUKT
METHOD FOR MAKING A CARBON FIBRE FROM A PAPER PRODUCT

(30) Priorité: 10.05.2019 FR 1904850
(43) Date de publication de la demande: 16.03.2022
(73) Titulaire: Institut de Recherche Technologique Jules Verne, 44340 Bouguenais (FR); Centre Technologique Nouvelle Aquitaine Composites & Matériaux Avancés, 33600 Pessac (FR); Faurecia Services Groupe, 92000 Nanterre (FR)
(72) Inventeur: PINEAU, Sylvain, 40000 MONT DE MARSAN (FR); MERCADER, Célia, 33400 TALENCE (FR); LARGEAU, Céline, 44430 LE LOROUX BOTTEREAU (FR)
(74) Mandataire: Ipside
(86) Numéro de dépôt international: PCT/EP2020/062658
(87) Numéro de publication internationale: WO 2020/229282

(56) Documents cités:
- EP-A1- 2 947 200
- WO-A1-2010/104458
- WO-A1-2014/162062
- WO-A1-2018/142025
- FR-A1- 2 997 097
- GB-A- 860 342
- US-A- 5 601 767

## Description

La présente invention s'inscrit dans le domaine général de la fabrication de fibres de carbone, destinées notamment à la préparation de matériaux composites, à partir de matériaux biosourcés.

Plus particulièrement, la présente invention concerne un procédé de fabrication d'une fibre de carbone à partir d'un produit en papier. L'invention concerne également un procédé plus global de fabrication d'un article en matériau composite à base de fibres de carbone distribuées dans une matrice de résine organique polymère, comprenant la mise en œuvre d'un procédé de fabrication d'une fibre de carbone selon l'invention.

Les fibres de carbone sont utilisées dans de nombreux domaines, mettant à profit leurs propriétés mécaniques, électriques et thermiques particulièrement avantageuses et leur faible poids.

La fabrication de fibres de carbone à partir de matières biosourcées renouvelables, afin de s'affranchir du problème de l'épuisement programmé des ressources fossiles, a fait l'objet de nombreuses recherches dans les dernières décennies. Il a en particulier été proposé par l'art antérieur de fabriquer de telles fibres à partir de cellulose, un glucide macromoléculaire qui forme la paroi des cellules végétales et qui constitue le principal composant du bois. La cellulose est la matière organique la plus abondante sur la terre. Les fibres de carbone obtenues à base de cellulose présentent en particulier l'avantage d'une très bonne structuration.

La présente invention vise à proposer un procédé permettant de fabriquer à bas prix, et de manière la plus respectueuse de l'environnement possible, à partir de cellulose, des fibres de carbone continues présentant des propriétés mécaniques suffisamment bonnes pour être utilisables pour de nombreuses applications, et en particulier pour la fabrication d'articles en matériaux composites.

Recherchant à atteindre cet objectif, les présents inventeurs se sont intéressés à la filière de recyclage du papier.

Le papier est en effet composé d'environ 70 à 85% de fibres cellulosiques, extraites du bois ou du recyclage du papier. Les 15 à 30 % restants sont des adjuvants de type charges minérales, essentiellement composées de carbonates, ainsi que divers additifs tels que des colles, amidons, pigments, etc., qui ont été ajoutés lors de la fabrication du papier pour lui conférer des propriétés particulières.

Une très grande quantité de papier est à l'heure actuelle consommée dans le monde, en particulier pour la fabrication de produits en papier tels que des papiers d'impression, emballages, papiers sanitaires et domestiques, mais aussi de produits d'hygiène ou à usage médical. Le recyclage des produits en papier, en particulier usagés, s'avère par conséquent d'un grand intérêt, autant sur le plan écologique que d'un point de vue économique, et ce notamment dans le contexte de la fabrication de fibres de carbone. Le prix de revient du papier usagé est en effet largement inférieur à celui des matériaux précurseurs classiques utilisés pour la fabrication de fibres de carbone, tels que la cellulose purifiée, notamment issue de l'industrie papetière, ou encore le polyacrylonitrile. Le document WO 2018/142025 décrit un procédé de préparation de fibres de cellulose, utilisables comme précurseurs de fibres de carbone, à partir de déchets cellulosiques de la vie quotidienne. Ce procédé comprend une étape initiale de traitement des déchets par cuisson dans une liqueur de glycérol alcalin, puis la dissolution de la pâte de cellulose ainsi obtenue dans un liquide ionique, et le filage de la solution obtenue pour former une fibre de cellulose. Le document WO 2014/162062 décrit un procédé de production de fibres en cellulose à partir d'un matériau lignocellulosique. Ce procédé comprend la dissolution du matériau dans un solvant particulier, un liquide ionique à base de diazabicyclononene, et le filage de la solution obtenue pour former une fibre de cellulose.

Le document US 5 601 767 décrit un procédé de production de fibres de cellulose à partir de papier, comprenant la dissolution d'un broyât de papier dans une solution aqueuse d'amine oxyde, l'élimination de l'eau par séchage à haute température, et la mise en forme d'une fibre de cellulose par filage par voie solvant. Ce document ne mentionne cependant nullement que cette fibre de cellulose puisse être utilisable pour la formation de fibres de carbone.

D'autres informations pertinentes peuvent être trouvées dans les documents GB 860 342 A, EP 2 947 200 A1, FR 2 997 097 A1 et WO 2010/104458 A1.

Les présents inventeurs ont découvert que la cellulose contenue dans des produits manufacturés en papier peut être récupérée sous une forme qui est suffisamment peu dégradée pour permettre sa mise en œuvre dans un procédé de filage conventionnel, habituellement appliqué à partir de pulpe de cellulose papetière, pour former des fibres à base de cellulose individuelles et continues, ces fibres à base de cellulose permettant par la suite, par carbonisation, d'obtenir des fibres de carbone dont les propriétés mécaniques sont tout à fait satisfaisantes, ceci avec un bon rendement carbone lors de l'étape de carbonisation. Plus particulièrement, il a été découvert par les présents inventeurs qu'un tel résultat peut être obtenu, dans des conditions opératoires spécifiques, avec un nombre minimal d'étapes, et en particulier sans mettre en œuvre d'étapes de prétraitement telles que cuisson, lavage, pulpage, etc., du produit manufacturé ou de la cellulose qu'il contient, avant l'étape de filage, et sans nécessiter d'apport de température important, autrement que pour l'étape de carbonisation en elle-même, et ce contrairement à ce qui est préconisé par l'art antérieur concernant la fabrication de fibres de cellulose précurseurs de fibres de carbone. Ces fibres de carbone peuvent notamment être utilisées pour la fabrication de matériaux composites.

Ainsi, il est proposé selon la présente invention un procédé de fabrication d'une fibre de carbone par recyclage d'un produit en papier.

On entend dans la présente description, par « produit en papier », tout produit manufacturé fabriqué à partir de pâte de papier, par exemple, mais non limitativement, les produits en papier de bureau ou d'imprimerie, y compris les feuilles et les enveloppes, le papier essuie-tout, le papier mouchoir, le papier hygiénique, les serviettes en papier, etc.

L'expression « produit en papier » n'inclut pas la pâte obtenue directement à partir du bois, par les procédés chimiques ou mécaniques de l'industrie papetière ».

Le produit manufacturé à partir duquel s'applique le procédé selon l'invention peut être aussi bien neuf qu'usagé, en particulier être en fin de vie.

Le procédé de fabrication d'une fibre de carbone selon l'invention comprend, après une étape de collecte du produit en papier::
a/ la préparation d'une fibre à base de cellulose, comprenant des étapes successives de :
a1/ broyage / déchiquetage de ce produit en papier, de sorte à obtenir un broyât de papier ;
a3/ dissolution du broyât obtenu à l'issue de l'étape a1/ directement dans une solution aqueuse d'acide phosphorique en tant que solution solvant, dans laquelle la cellulose est soluble, pour former une solution dite de filage ;
a4/ à partir de cette solution de filage, fabrication d'une fibre continue à base de cellulose par un procédé de filage en voie solvant, également couramment nommé procédé de filage par voie humide ;
a5/ le cas échéant, étirage de la fibre continue à base de cellulose ainsi obtenue, de sorte à former une fibre de plus grande longueur, la mise en œuvre d'une telle étape d'étirage étant particulièrement préférée dans le cadre de l'invention ; b/ et la carbonisation de la fibre continue à base de cellulose ainsi obtenue pour former une fibre de carbone.

Par « dissolution du broyât directement dans une solution aqueuse d'acide phosphorique », on entend dans la présente description que le broyât obtenu à l'issue de l'étape a1/ est directement dissous, tel quel, dans la solution aqueuse, sans être soumis à une ou plusieurs étapes de traitement préalables.

Le procédé de filage en voie solvant, ou filage par voie humide, mis en œuvre dans l'étape a4/ du procédé selon l'invention consiste, de manière classique en elle-même, à réaliser une extrusion de la solution de filage à travers une filière de filage, dans un bain dit de coagulation contenant un non-solvant de la cellulose, qui est miscible avec la solution solvant, c'est-à-dire la solution aqueuse d'acide phosphorique, utilisée pour préparer la solution de filage.

Le procédé de filage en voie solvant mis en œuvre selon l'invention peut être un procédé dit « au mouillé », selon lequel la filière de filage est immergée dans le bain de coagulation, ou encore un procédé dit « avec espace d'air », selon lequel la filière de filage est placée à une distance, généralement comprise entre 1 mm et 20 cm, au-dessus du bain de coagulation.

Le procédé de fabrication d'une fibre de carbone selon l'invention est simple à mettre en œuvre, chacune de ses étapes pouvant être réalisée par des techniques connues de l'homme du métier. Par un nombre d'étapes extrêmement réduit, il permet de former des fibres de carbone présentant de bonnes qualités, notamment mécaniques, et ce à un coût particulièrement avantageux, et bien inférieur à celui requis pour fabriquer des fibres de carbone à base de matériaux précurseurs conventionnels, tels que par exemple la cellulose purifiée, issue de l'industrie papetière, ou encore le polyacrylonitrile. En particulier, le procédé selon l'invention, comportant une étape de préparation d'une fibre continue à base de cellulose, qui induit un réagencement des structures moléculaires au sein de la fibre, résultant en une structure cristalline de la cellulose au sein de la fibre, permet d'obtenir une fibre de carbone finale présentant de très bonnes propriétés mécaniques. Le procédé selon l'invention permet en particulier avantageusement d'obtenir des fibres de carbone présentant une résistance à la contrainte supérieure à 1 200 MPa et un module de Young supérieur à 75 GPa, et même une résistance à la contrainte supérieure ou égale à 2500 MPa et un module de Young supérieur ou égal à 200 GPa après graphitisation. Ces propriétés mécaniques les rendent tout à fait adaptées à une utilisation dans des domaines d'application requérant une forte résistance des matériaux mis en œuvre. Rien dans l'art antérieur ne suggérait que des propriétés mécaniques aussi satisfaisantes auraient pu être obtenues avec un nombre d'étapes aussi réduit, c'est-à-dire le broyage du produit manufacturé en papier, la dissolution du broyât, sans autre prétraitement, dans la solution aqueuse d'acide phosphorique, et le filage en voie solvant de la solution obtenue. De manière plus générale, les fibres de carbone obtenues par le procédé de fabrication selon l'invention trouvent application dans de nombreux domaines, notamment pour la réalisation de matériaux ou de pièces destinées à être mises en œuvre dans des domaines aussi variés que les domaines du bâtiment et des infrastructures, des équipements industriels, du transport automobile, ferroviaire ou naval, de l'électricité et de l'électronique, des sports et loisirs, des énergies renouvelables et notamment éoliennes, etc. A cet effet, elles peuvent être utilisées en l'état, assemblées sous forme de non-tissés ou encore sous forme tissée ou tricotée, le cas échéant en mélange avec d'autres types de fibres. Les fibres de carbone obtenues par le procédé de fabrication selon l'invention peuvent avantageusement être utilisées, en raison de leur faible coût, en remplacement de fibres de verre dans des applications nécessitant l'utilisation de fibres de renfort de résistance à la contrainte modérée et de faible coût de revient. Par exemple, les fibres de carbone obtenues par le procédé selon l'invention peuvent être utilisées pour la fabrication de structures dans le domaine du bâtiment ou de la production d'énergies renouvelables, telles que des pales d'éoliennes ou d'hydroliennes, en remplacement de tout ou partie des fibres de verre qui y étaient mises en œuvre jusqu'à présent. Les fibres de carbone selon l'invention peuvent par exemple être utilisées pour remplacer 5 à 40 %, en particulier 10 à 30 %, de ces fibres de verre.

La présente invention concerne ainsi notamment une pale d'éolienne, ou une pale d'hydrolienne, de grandes dimensions, c'est-à-dire d'au moins 30 mètres de longueur, et typiquement de 40 à 100 mètres de longueur, formée en matériau composite à base de fibres de renfort dispersées dans une matrice de résine polymère, et comprenant en tant que fibres de renfort de la pale, cette dernière étant typiquement formée de deux demi-pales, entre 5 et 40 %, et de préférence entre 10 et 30 %, de fibres de carbone issues de cellulose obtenues par un procédé de fabrication selon l'invention, le restant des fibres de renfort étant constitué par des fibres de verre. La densité de ces fibres de carbone issues de cellulose est de préférence avantageusement comprise entre 1,3 et 1,8 g/m³, alors que la densité des fibres de verre est environ égale à 2,2 g/m³. Le pourcentage ci-avant de fibres de carbone issues de cellulose obtenues selon l'invention, par rapport à la quantité totale de fibres de renfort, est défini pour les fibres de renfort de la voilure de la pale, et s'entend en plus du pourcentage de fibres de carbone comprises dans le longeron en composite résine-carbone (couramment désigné par l'expression « spar cap »), qui est incorporé pour les pales de grandes dimensions à l'intérieur de la pale, dans le volume défini par les demi-pales.

Le pourcentage et la répartition des fibres de carbone issues de cellulose dans la pale sont calculés notamment selon plusieurs critères : dimensions et propriétés mécaniques, poids, encombrement, énergie du moteur, puissance cible de l'éolienne (avantageusement 3 à 8 MW).

Les pales d'éoliennes ou analogues (d'hydroliennes par exemple) ainsi obtenues permettent, pour une longueur et des propriétés mécaniques cibles, de diminuer la puissance requise des moteurs de la structure.

Le procédé selon l'invention peut en outre répondre à l'une ou plusieurs des caractéristiques décrites ci-après, mises en œuvre isolément ou en chacune de leurs combinaisons techniquement opérantes.

Le broyage / déchiquetage du produit en papier mis en œuvre à l'étape a1/ du procédé selon l'invention peut être réalisé selon toute méthode connue de l'homme du métier, par exemple au moyen d'une broyeuse / déchiqueteuse classique en elle-même.

Préférentiellement, dans l'étape a1/ le broyage est réalisé de sorte à obtenir un broyât formé de particules dont la plus grande dimension est comprise entre 100 et 1000 µm, de préférence comprise entre 200 et 500 µm. Ces particules sont de préférence non agglomérées.

Cette étape peut être précédée de diverses opérations de nettoyage et/ou dépoussiérage du produit en papier, ainsi que de découpe.

Le broyât ainsi obtenu est directement dissous dans la solution de filage.

Le procédé selon l'invention s'avère ainsi particulièrement avantageux par rapport aux procédés proposés par l'art antérieur pour préparer la cellulose destinée à la fabrication des fibres de carbone à partir de biomasse lignocellulosique, qui comportent des étapes de purification avancée. Le temps et le coût nécessaires à la fabrication de fibres de carbone par le procédé selon l'invention sont ainsi largement inférieurs à ceux des procédés conventionnels de préparation de fibres de carbone à partir de biomasse lignocellulosique. Le coût de la matière première cellulosique soumise à l'étape de filage est en particulier largement inférieur à celui des procédés conventionnels de préparation de fibres de carbone.

Dans le procédé selon l'invention, ne comprenant pas une telle étape a2/ de prétraitement du broyât de papier, en comparaison des procédés comprenant une telle étape de prétraitement, la mise en œuvre de l'étape de filage par voie solvant est avantageusement tout aussi facile et le rendement de fabrication d'une fibre de carbone est tout aussi élevé. Le procédé selon l'invention allie ainsi avantageusement rapidité, efficacité et faible coût.

Préférentiellement, le broyât dissous dans la solution solvant à l'étape a3/ du procédé selon l'invention contient plus de 90 % en poids, de préférence plus de 95 % en poids, de cellulose par rapport au poids total du broyât. Sa teneur en eau est préférentiellement inférieure ou égale à 15 % en poids, par rapport au poids total du broyât. Sa teneur en charge minérales est de préférence inférieure ou égale à 0,3 %, et préférentiellement inférieure ou égale à 0,1 %, en poids par rapport au poids total du broyât. Une telle caractéristique améliore avantageusement les propriétés mécaniques de la fibre de carbone obtenue par le procédé selon l'invention.

Le produit en papier à partir duquel le procédé selon l'invention est mis en œuvre peut être formé en papier issu du recyclage.

Il peut autrement être formé en papier issu d'une pâte papetière chimique, en particulier d'une pâte kraft ou d'une pâte bisulfite. Il s'agit par exemple de papier d'écriture ou d'impression. Les pâtes papetières chimiques sont obtenues par cuisson du bois à l'aide de produits chimiques. Il existe deux procédés principaux : le procédé acide, permettant d'obtenir une pâte bisulfite, et le procédé kraft, comprenant la cuisson du bois dans une liqueur contenant de la soude et du sulfure de sodium.

L'étape a3/ de dissolution du broyât obtenu à l'issue de l'étape a1/ du procédé met en œuvre, en tant que solution solvant de la cellulose, une solution aqueuse d'acide phosphorique.

Des solutions solvants classiques sont les solutions de chlorure de zinc, l'acide formique, la N-méthylmorpholine-N-oxyde (NMMO), les liquides ioniques, ou l'un quelconque de leurs mélanges techniquement possibles.

En tant que solution solvant, une solution aqueuse d'acide phosphorique, de préférence concentrée à 75 à 99 % en volume, par rapport au volume total de la solution aqueuse, en acide phosphorique, permet seule, de manière surprenante, d'obtenir, à partir d'un produit manufacturé en papier, qui est soumis à une simple étape de broyage avant sa dissolution dans la solution solvant, des fibres de carbone de propriétés mécaniques particulièrement avantageuses.

La dissolution du broyât dans la solution solvant peut être assistée par un traitement thermique, par exemple par chauffage sous pression réduite, puis refroidissement à très basse température, de manière classique en elle-même. Ce traitement thermique est cependant de préférence limité à une température inférieure ou égale à 45 °C.

De manière plus générale, au cours de l'étape a/ de préparation d'une fibre à base de cellulose, la température appliquée à la cellulose n'excède pas 45 °C. Il en résulte des propriétés mécaniques de la fibre de carbone finale particulièrement bonnes, avec l'avantage d'une faible dépense énergétique.

Dans des modes de mise en œuvre particuliers de l'invention, la solution de filage est soumise au procédé de filage en voie solvant sans étape préalable de séchage, visant notamment à en éliminer l'eau. Le nombre d'étapes du procédé selon l'invention est alors avantageusement réduit au minimum.

La solution de filage n'est de préférence soumise à aucune autre étape préalablement au filage en lui-même, à l'exception de l'incorporation, dans cette solution, d'ingrédients additionnels tels que décrits ci-dessous. Elle peut en outre le cas échéant être soumise à une étape de filtration. Dans des modes de réalisation préférés de l'invention, la solution de filage n'est pas filtrée préalablement au filage.

Dans des modes de mise en œuvre préférés de l'invention, dans l'étape a3/ de dissolution du broyât dans la solution solvant, constituée par la solution aqueuse d'acide phosphorique, le broyât est mélangé à de la cellulose purifiée.

On entend dans la présente description, par cellulose purifiée, la cellulose obtenue à partir de biomasse lignocellulosique, en particulier la cellulose dite papetière, c'est-à-dire issue d'un procédé papetier et présentant un degré plus élevé de pureté que la cellulose contenue dans le broyât obtenu selon l'invention. La cellulose purifiée est couramment mise en œuvre, dans les procédés de l'art antérieur, pour la fabrication de fibres de carbone.

La cellulose purifiée mise en œuvre dans le cadre de la présente invention peut être issue de bois de feuillu ou résineux, de plantes annuelles, comme la paille ou le coton, etc. Elle peut avoir été obtenue par toute méthode classique en elle-même, par exemple par un procédé de cuisson kraft ou à la soude.

Dans le mélange de broyât et de cellulose purifiée incorporé dans la solution de filage, la cellulose purifiée est de préférence présente dans une quantité en poids comprise entre 20 et 90 %, de préférence comprise entre 40 et 60 %, par exemple d'environ 50 %, par rapport au poids total du mélange de broyât et de cellulose purifiée.

La quantité totale de broyât, ou le cas échéant du mélange de broyât et de la cellulose purifiée qui lui est adjointe, qui est dissoute dans la solution solvant à l'étape a3/ du procédé, est comprise entre 1 et 50 % en poids, de préférence entre 5 et 30 % en poids et préférentiellement entre 5 et 20 % en poids, par exemple entre 5 et 15 % en poids, par rapport au poids total de la solution de filage obtenue.

Ainsi, dans l'étape a3/ du procédé selon l'invention, la concentration en broyât, le cas échéant en mélange de broyât et de cellulose purifiée, dissous dans la solution solvant, est comprise entre 1 et 50 % en poids, de préférence entre 5 et 30 % en poids et préférentiellement entre 5 et 20 % en poids, par exemple entre 5 et 15 % en poids, par rapport au poids total de la solution de filage obtenue.

Le broyât de papier ou de pâte de papier peut également être mélangé avec d'autres substances que la cellulose purifiée, par exemple avec du polyacrylonitrile, permettant avantageusement de former des fibres de carbone à propriétés mécaniques encore améliorées, présentant notamment une résistance à la contrainte supérieure à 4 000 MPa après graphitisation. Ces propriétés mécaniques les rendent particulièrement adaptées à une utilisation dans des domaines d'application requérant une très forte résistance des matériaux mis en œuvre, par exemple pour la fabrication de réservoirs à hydrogène.

Le procédé selon l'invention peut comprendre l'ajout dans la solution de filage d'un ou plusieurs additifs, visant à mieux structurer la matière, à améliorer les propriétés mécaniques des fibres formées, etc.

Chacun de ces additifs peut notamment être présent dans la solution de filage à une teneur comprise entre 1 ppm et 10 % en poids, par rapport au poids total de la solution de filage, de préférence entre 1 ppm et 5 % en poids, par exemple entre 100 ppm et 1 % en poids, par rapport au poids total de la solution de filage. Des exemples d'additifs pouvant être ajoutés à la solution de filage selon l'invention sont les agents compatibilisants, tels que des polymères ou copolymères greffés anhydrides maléiques. A titre d'exemple, on peut notamment citer le Lotader^{®} 3300 commercialisé par la société Arkema, ou encore le Beiwa^{®} 901de DzBh.

Dans des modes de mise en œuvre particuliers de l'invention, la solution de filage contient un agent émulsifiant non-ionique, de préférence dans une concentration comprise entre 0,1 et 1 % en poids, par exemple d'environ 0,2 % en poids, par rapport au poids de broyât, le cas échéant par rapport au poids du mélange de broyât et de cellulose purifiée, dissous dans ladite solution solvant lors de ladite étape a3/. La solution de filage peut par exemple contenir un ou plusieurs agents émulsifiants vendus sous la dénomination Emulan^{®} par la société BASF.

La solution de filage peut être filtrée, pour en éliminer les particules solides, avant de procéder à l'étape suivante du procédé selon l'invention.

Dans des modes de mise en œuvre particuliers de l'invention, une charge carbonée de taille nanométrique, ou plusieurs charges carbonées de taille nanométrique, est(sont) ajoutée(s) à la solution de filage, lors de la mise en œuvre de l'étape a3/ du procédé selon l'invention, ou juste avant ou après. Les charges carbonées de taille nanométrique sont de préférence ajoutées à la solution de filage dans une quantité comprise entre 1 ppm et 30 % en poids par rapport au poids de broyât, le cas échéant par rapport au poids du mélange de broyât et de cellulose purifiée, dissoutes dans la solution solvant lors de l'étape a3/. Cette concentration est préférentiellement comprise entre 0,001 et 5 %, et notamment comprise entre 0,01 et 5 %.

On entend ici, par « charge carbonée de taille nanométrique », une charge comprenant un élément du groupe formé des nanotubes de carbone mono ou multifeuillets, des nanofibres de carbone, du graphène, d'oxyde de graphène, d'oxyde de graphène réduit, des fullerènes, des nanofibrilles de cellulose, des nanocristaux de cellulose et du noir de carbone, ou tout mélange de tels éléments. De préférence, les charges carbonées de taille nanométrique intégrées dans la solution de filage selon l'invention sont des nanotubes de carbone, seuls ou en mélange avec du graphène. Des nanotubes de carbone sont par exemple commercialisés par la société Arkema sous le nom Graphistrength^{®}.

Les charges carbonées de taille nanométrique selon la présente invention peuvent présenter une plus petite dimension comprise entre 0,1 et 200 nm, de préférence entre 0,1 et 160 nm, et préférentiellement entre 0,1 et 50 nm. Cette dimension peut par exemple être mesurée par diffusion de la lumière.

On entend par « graphène », selon la présente invention, un feuillet de graphite plan, isolé et individualisé, mais aussi, par extension, un assemblage comprenant entre un et quelques dizaines de feuillets et présentant une structure plane ou plus ou moins ondulée. Cette définition englobe ainsi les FLG (pour l'anglais Few Layer Graphene, c'est-à-dire du graphène faiblement empilé), les NGP (pour l'anglais Nanosized Graphene Plates, c'est-à-dire des plaques de graphène de dimension nanométrique), les CNS (pour l'anglais Carbon NanoSheets, c'est-à-dire des nano-feuilles de graphène), les GNR (pour l'anglais Graphene NanoRibbons, c'est-à-dire des nano-rubans de graphène). Elle exclut en revanche les nanotubes et nanofibres de carbone, qui sont respectivement constitués de l'enroulement d'un ou plusieurs feuillets de graphène de manière coaxiale et de l'empilement turbostratique de ces feuillets. Les charges carbonées de taille nanométrique sont de préférence incorporées dans la solution de filage selon l'invention sous forme d'une dispersion liquide, pouvant être aqueuse ou solvantée.

La dispersion des charges carbonées de taille nanométrique peut être réalisée par une sonde à ultrasons, un broyeur à billes, un mélangeur haut cisaillement, ou tout autre dispositif classiquement mis en œuvre, et le cas échéant en présence d'un agent tensioactif.

Le procédé de filage mis en œuvre à l'étape a4/ du procédé selon l'invention, pour former une fibre de cellulose continue, peut être de tout type connu de l'homme du métier.

Comme exposé ci-avant, dans cette étape, la solution de filage est injectée à travers une filière de filage constituée d'un ou plusieurs trous, dans un bain de coagulation, en statique ou en écoulement, directement dans le bain (selon la méthode dite au mouillé, en anglais « wet-spinning ») ou à travers un espace d'air (selon la méthode dite avec espace d'air, en anglais « dry-jet wet spinning »). Au contact du bain de coagulation, la fibre se solidifie. On obtient alors avantageusement une fibre continue à base de cellulose.

Le bain de coagulation mis en œuvre peut présenter toute composition classique en elle-même, compatible avec l'acide phosphorique de la solution de filage et le type de procédé de filage en voie solvant particulier mis en œuvre.

Par exemple, le bain de coagulation peut être formé à base d'isopropanol, d'eau, d'acétone, ou de tout autre solvant permettant la coagulation de la cellulose à son contact, ou de l'un quelconque de leurs mélanges.

Dans un mode de mise en œuvre particulier de l'invention, la solution de filage est formée à base d'acide phosphorique, le cas échéant en présence d'un émulsifiant non ionique, et le bain de coagulation est formé d'isopropanol, seul ou en mélange avec l'eau.

La fibre continue à base de cellulose obtenue par le procédé de filage selon l'invention, pouvant se présenter sous forme de monofilament ou de multifilaments, peut ensuite être lavée et séchée.

Le cas échéant, elle est soumise à une étape a5/ d'étirage, pour former une fibre de plus grande longueur.

L'étape d'étirage des fibres peut être réalisée selon toute méthode et au moyen de tout appareillage connus de l'homme du métier pour la réalisation d'une telle opération. Elle peut notamment être réalisée à une température provoquant un ramollissement du matériau constituant les fibres. A cet effet, les fibres défilent successivement sur un banc de rouleaux dits d'alimentation, à travers un four porté à ladite température, puis sur un banc de rouleaux dits d'étirage. Elles subissent un étirage entre les deux bancs de rouleaux, selon le rapport des vitesses de rotation des rouleaux d'alimentation et des rouleaux d'étirage. Elles peuvent autrement être étirées sur des rouleaux chauffants tournant à différentes vitesses.

Un tel étirage permet avantageusement d'aligner les chaines polymères le long de l'axe des fibres.

Les fibres peuvent éventuellement être traitées en sortie de filage, par des traitements par rayonnements, tels que des rayons gamma, des rayons beta, des faisceaux d'électrons, des rayons UV.

Ensuite, la fibre à base de cellulose obtenue, qui peut présenter une longueur importante, peut être mise en bobine, par exemple sur un tube en carton.

La fibre à base de cellulose obtenue selon la présente invention peut ensuite être ensimée, de manière classique en elle-même, avant d'être soumise à l'étape de carbonisation afin d'obtenir une fibre de carbone continue.

Dans une variante de l'invention, les charges carbonées de taille nanométrique sont introduites dans le bain d'ensimage, et non dans la solution de filage comme exposé ci-avant.

L'étape b/ de carbonisation de la fibre continue à base de cellulose du procédé selon l'invention est réalisée de manière classique en elle-même, en mettant en œuvre toute combinaison de paramètres opératoires décrite dans l'art antérieur pour la carbonisation de fibres de cellulose.

Elle est de préférence réalisée sous atmosphère inerte.

La carbonisation peut être réalisée en continu, la fibre défilant dans le four de carbonisation, ou en discontinu, c'est-à-dire en mode statique, la fibre étant de préférence maintenue sous tension dans le four.

Préalablement à la carbonisation, la fibre continue à base de cellulose peut être imprégnée d'un ou plusieurs additifs, notamment d'agents dits de carbonisation, favorisant l'augmentation des propriétés mécaniques de la fibre de carbone finalement obtenue et l'augmentation du rendement carbone de l'étape de carbonisation. Ces additifs sont classiques en eux-mêmes. A titre d'exemple, la fibre à base de cellulose peut être imprégnée d'un ou plusieurs des additifs suivants : des composés acides de Brönsted ou relâchant des acides de Brönsted lors d'une montée en température, notamment les halogénures d'hydrogène, les halogénures ayant un contre-ion quelconque tel que le sodium, le potassium, l'ammonium, etc., l'acide sulfurique, les sulfates ayant un contre-ion quelconque tel que le sodium, le potassium, l'ammonium, etc., les acides sulfoniques organiques porteurs d'un groupement alkyl, tel que l'acide méthylsulfonique, ou un groupement aryl, tel que l'acide paratoluènesulfonique, ou tout autre groupement organique, les sulfonates organiques correspondant aux acides sulfoniques ci-avant et ayant un contre-ion quelconque tel que le sodium, le potassium, l'ammonium, etc., l'acide phosphorique et les acides polyphosphoriques, et/ou les phosphates et polyphosphates ayant un contre-ion quelconque tel que le sodium, le potassium, l'ammonium etc. ; des composés acides de Lewis, notamment l'acide borique et/ou des halogénures de métaux tels que le chlorure d'aluminium AlCl₃ ou le chlorure de fer FeCl₂ ; de l'urée ; des charges carbonées de taille nanométrique ; et/ou des formulations à base de polymères siliconés, par exemple à base de polydiméthylsiloxane, notamment associé à un agent réticulant. Une telle liste n'est nullement limitative de l'invention.

Les additifs d'imprégnation à base de polymères siliconés sont particulièrement préférés dans le cadre de la présente invention, car permettant d'améliorer plus encore les propriétés mécaniques de la fibre de carbone obtenue selon l'invention. Les additifs d'imprégnation de type siliconés sont de préférence utilisés selon un taux, défini comme le pourcentage massique d'additif déposé par rapport au poids total de la fibre cellulosique et de l'additif, compris entre 0,01 et 20 %, de préférence entre 0,5 et 10 %, et préférentiellement encore entre 1 et 5 %.

La carbonisation peut être réalisée à une température comprise entre 1000 et 1500°C, et précédée ou non d'une étape de stabilisation sous air à une température de l'ordre de 250°C.

Dans des modes de mise en œuvre particuliers de l'invention, le four de carbonisation est hermétiquement fermé et mis sous vide jusqu'à une valeur inférieure à 1.10⁴ Pa (0,1 bar). Il est ensuite rempli d'un gaz inerte, tel que de l'azote, de l'argon, etc., et une fuite de gaz est créée de manière à ce que le débit de gaz soit compris entre 50 et 500 renouvellements de volume par heure. La pression dans le four est de préférence comprise entre 1.10³ Pa et 5.10⁴ Pa au-dessus de la pression atmosphérique. La température appliquée dans le four de carbonisation est de préférence comprise entre 800°C et 1500°C.

On obtient, à l'issue de ce traitement de carbonisation, une fibre de carbone. Cette fibre de carbone peut ensuite être soumise, le cas échéant, à un traitement de graphitisation, de sorte à obtenir une meilleure structuration du carbone, et de ce fait des propriétés mécaniques plus avantageuses. Ce traitement peut par exemple être réalisé par chauffage de la fibre jusqu'à une température comprise entre 2000 et 3000°C, sous gaz inerte, par exemple pendant une durée comprise entre 30 secondes et 10 minutes.

La fibre à base de cellulose selon l'invention peut autrement être carbonisée en continu, en la faisant défiler successivement dans différents fours, dont un four de carbonisation sous atmosphère inerte à une température comprise entre 800°C et 1500°C, puis un four de graphitisation à une température pouvant aller jusqu'à 2500°C. La vitesse de défilement de la fibre dans ces fours est alors préférentiellement comprise entre 0,1 et 10 m/h.

La fibre de carbone obtenue à l'issue du procédé selon l'invention peut présenter un diamètre compris entre 5 et 30 µm, et une longueur de quelques mètres.

Dans des modes de mise en œuvre particuliers de l'invention, le procédé comprend une étape de formation d'une nappe de fibres à base de cellulose à partir d'une pluralité de fibres continues à base de cellulose obtenues à l'étape a4/ ou a5/. L'étape b/ de carbonisation de cette fibre continue à base de cellulose est alors réalisée par carbonisation de la nappe de fibres continues à base de cellulose, pour former une nappe à base de fibres de carbone.

La nappe formée des fibres à base de cellulose selon l'invention peut présenter toute forme et toutes dimensions. Les fibres peuvent y être agencées en tissus de différents grammages et tissages, par exemple en taffetas, sergé, satin, etc., utilisés seuls ou en associations, ou en non tissés, par exemple dans lesquels les fibres sont toutes orientées dans la même direction, ou dans lesquels les fibres sont orientées aléatoirement, tels que les voiles, feutres ou films non tissés. On parle alors de nappes unidirectionnelles.

Les fibres continues à base de cellulose selon l'invention peuvent être mises en œuvre, dans la nappe, seules ou en association avec d'autres types de fibres.

La carbonisation de la nappe de fibres continues à base de cellulose peut être réalisée selon toute méthode de carbonisation connue de l'homme du métier, en mode statique ou en défilement continu dans un four de carbonisation. Les caractéristiques exposées ci-avant en référence au traitement des fibres individuelles s'appliquent de manière similaire pour la carbonisation de la nappe de fibres continues à base de cellulose selon l'invention.

Les nappes de fibres continues à base de cellulose selon l'invention peuvent être soumises à carbonisation individuellement, ou sous forme d'un empilement de nappes, à plat ou le cas échéant après mise en forme selon une forme souhaitée.

Une fibre de carbone obtenue par un procédé selon l'invention répond à l'une ou plusieurs des caractéristiques ci-avant.

Cette fibre de carbone est continue, et elle peut présenter un diamètre compris entre 1 et 1000 µm, de préférence compris entre 15 et 30 µm, et une longueur de quelques mètres.

Elle peut avantageusement présenter une résistance à la contrainte supérieure à 1200 MPa, de préférence supérieure ou égale à 2000 MPa après graphitisation, et/ou un module de Young supérieur à 75 GPa, de préférence supérieur ou égal à 200 GPa après graphitisation, ces paramètres étant mesurés selon la norme ISO 11566, méthode B.

Une fibre continue à base de cellulose obtenue en tant que produit intermédiaire lors de la mise en œuvre d'un procédé de fabrication d'une fibre de carbone selon l'invention, à l'issue de l'étape a/ de ce procédé est constituée à partir de produits en papier recyclés, seuls ou en mélange avec d'autres constituants, come listé ci-avant.

Cette fibre continue à base de cellulose peut présenter un diamètre compris entre 10 et 30 µm, et/ou une résistance comprise entre 10 et 40 cN/tex, et /ou un module de Young compris entre 10 et 30 GPa, ces paramètres étant mesurés selon la norme ISO 2062.

Elle est avantageusement stockable et transportable.

Une nappe de fibres de carbone peut être obtenue à partir de fibres de carbone fabriquées selon l'invention, lesdites fibres de carbone étant tissées ou tricotées entre elles ou y étant juxtaposées sous forme de non-tissé.

Une nappe de fibres de carbone peut être obtenue par un procédé de fabrication d'une fibre de carbone selon l'invention, ce procédé comportant une étape de formation d'une nappe de fibres à base de cellulose à partir d'une pluralité de fibres continues à base de cellulose obtenues à l'étape a4/ ou a5/ du procédé, et une étape de carbonisation de ladite nappe de fibres continues à base de cellulose, pour former une nappe à base de fibres de carbone.

Une structure tridimensionnelle fibreuse peut être obtenue par empilement d'une pluralité de nappes de fibres continues à base de cellulose fabriquées selon l'invention, ou par empilement d'une pluralité de nappes de fibres de carbone fabriquées selon l'invention, le cas échéant mises en forme à la forme souhaitée, par exemple pour constituer une préforme pour la fabrication d'un article en matériau composite à base de fibres de renfort distribuées dans un liant.

Une fibre de carbone ou une nappe de fibres de carbone fabriquées selon l'invention peut être utilisée pour la fabrication d'un article en matériau composite à base de fibres de carbone distribuées dans une matrice de résine organique polymère.

Un autre aspect de l'invention concerne un procédé de fabrication d'un article en matériau composite à base de fibres de carbone distribuées dans une matrice de résine organique polymère, ce procédé comprenant : la mise en œuvre d'un procédé de fabrication d'une fibre de carbone selon l'invention, comprenant la fabrication d'une fibre de carbone par carbonisation d'une fibre continue à base de cellulose individuelle, et la formation d'une nappe de fibres de carbone à partir d'une pluralité des fibres de carbone ainsi obtenues ; ou la mise en œuvre d'un procédé de fabrication d'une fibre de carbone selon l'invention, comprenant la formation d'une nappe de fibres continues à base de cellulose et la carbonisation de cette nappe de fibres pour former une nappe à base de fibres de carbone ; et la fabrication d'un article en matériau composite à partir d'une pluralité de nappes de fibres de carbone ainsi obtenues.

La fabrication d'un article en matériau composite à partir d'une pluralité de nappes de fibres de carbone obtenues conformément à la présente invention peut être réalisée selon toute méthode classique en elle-même pour l'homme du métier.

Un matériau composite est défini dans toute la présente description de manière classique, c'est-à-dire comme constitué par l'assemblage de plusieurs matériaux ou composants élémentaires différents liés entre eux, plus particulièrement de fibres longues mécaniquement résistantes, dans le cas présent de fibres de carbone, distribuées dans une matrice de résine organique polymère. Le terme résine définit ici un composé polymère, pouvant être du type thermoplastique ou thermodurcissable, qui joue le rôle d'une colle structurale dans laquelle les fibres sont dispersées de manière plus ou moins organisée. Le matériau composite ainsi formé présente des propriétés mécaniques qui lui sont propres, tout à fait avantageuses en termes de résistance mécanique et de légèreté.

Schématiquement, la fabrication d'un tel matériau composite consiste en un moulage selon la forme souhaitée d'un empilement d'une pluralité de nappes de fibres de carbone imprégnées de la résine organique non polymérisée, dans des conditions, notamment de température, provoquant la polymérisation de cette résine.

L'article en matériau composite selon l'invention peut par exemple être fabriqué en utilisant la technique de drapage de plis pré-imprégnés de résine, au moins certains de ces plis étant constitués par les nappes de fibres de carbone selon l'invention, puis polymérisation de l'ensemble en autoclave de manière à former, de façon classique, le matériau composite ; ou encore par des techniques d'injection ou d'infusion de résine, notamment par la technique par transfert de résine, dite de RTM, pour l'anglais « Resin Transfer Moulding », sur des plis de fibres sèches, certains de ces plis étant constitués par les nappes de fibres de carbone selon l'invention.

Le matériau composite fabriqué selon la présente invention peut être de type monolithique et/ou de type sandwich, par exemple à structure nid d'abeille.

Les fibres peuvent y être agencées en tissus de différents grammages et tissages, par exemple en taffetas, sergé, satin, etc., utilisés seuls ou en associations, ou en non tissés, par exemple dans lesquels les fibres sont toutes orientées dans la même direction.

Les fibres de carbone obtenues conformément à la présente invention peuvent y être mises en œuvre seules, ou bien en association avec un ou plusieurs autres types de fibres, toute configuration d'une telle association entrant dans le cadre de la présente invention.

Toute résine classique en elle-même peut être utilisée dans le cadre de l'invention, notamment les résines du type thermodurcissable, par exemple les résines époxy, les résines phénoliques ou un mélange des deux, ou encore les résines thermoplastiques.

Un article en matériau composite à base de fibres de carbone distribuées dans une matrice de résine organique polymère obtenu par un procédé de fabrication selon l'invention, répondant à l'une ou plusieurs des caractéristiques ci-avant trouve avantageusement application dans de nombreux domaines.

Les caractéristiques et avantages de l'invention apparaîtront plus clairement à la lumière des exemples de mise en œuvre ci-après, fournis à simple titre illustratif et nullement limitatifs de l'invention.

### Exemple comparatif 1 - papier de bureau

A titre d'exemple, un procédé de fabrication d'une fibre de carbone est mis en œuvre à partir d'un produit papetier, tel que du papier de bureau pour impression et écriture (papier A4 Clairefontaine Clairalpha 80g/m²).

Tout d'abord, ce papier est débarrassé des charges qu'il contient. Pour cela, il subit la procédure suivante.

Les feuilles de papiers sont tout d'abord déchiquetées de façon automatisée.

Les chiquettes obtenues sont ensuite soumises à un prétraitement visant à diminuer leur taux de charges minérales et autres impuretés. Pour cela, elles sont placées dans un pulpeur avec de l'eau pour former une pâte de papier en suspension dans l'eau, à 20 g/L de matière sèche. Cette pâte est nettoyée au jet d'eau sous pression à trois reprises sur tamis de 50 µm (hyperlavage), jusqu'à obtention d'une eau claire. La pâte hyperlavée est ensuite étuvée à 95 °C pendant une nuit, puis broyée pour former des particules de plus grande dimension d'environ 250 µm.

Des analyses thermogravimétriques aux différentes étapes de ce procédé permettent de contrôler son efficacité, par détermination du taux de charges minérales contenu dans la matière. A cet effet un échantillon de matière est tout d'abord soumis à une température de 500 °C sous air, de sorte à déterminer sa teneur en charges minérales en général ; puis à une température de 900 °C sous air, de sorte à déterminer la part de carbonate dans ces charges minérales.

Il est ainsi déterminé que le papier de départ contenait 14 % de charges minérales (composées à 94 % de carbonates) et 5 % d'eau. A l'issue du prétraitement, le taux de charges minérales dans la pâte de papier broyée est inférieur à 1 %.

La pâte de papier broyée est ensuite dissoute dans de l'acide phosphorique, dans une quantité en poids de 10 % en poids par rapport au poids total du mélange.

Il est ajouté à cette solution une dispersion aqueuse de nanotubes de carbone, formée au moyen d'un réacteur relié à un broyeur à billes et à une sonde à ultrasons, par dispersion de nanotubes de carbone dans une quantité de 0,9 % en poids, en présence de l'agent tensioactif commercialisé sous le nom Brij^{®} S20 à une concentration de 1,2 % en poids, dans l'eau.

Cette dispersion aqueuse est ajoutée à la solution de filage dans une quantité de 0,1 % en poids par rapport au poids de pâte broyée contenue dans la solution de filage. La qualité de dissolution est vérifiée par microscopie optique et par mesures de viscosité. Cette dispersion ne contient aucun agrégat de taille supérieure ou égale à 1 µm.

Il est également ajouté à cette solution un émulsifiant non-ionique, tel que le produit commercialisé sous le nom Emulan^{®}, dans une quantité de 0,2 % en poids par rapport au poids de pâte broyée contenue dans la solution de filage. Un tel émulsifiant non-ionique facilite avantageusement l'imprégnation de la cellulose du papier recyclé par l'acide phosphorique.

Le mélange est chauffé à 45 °C pendant 15 min sous pression réduite de 100 mbar et sous agitation à 40 tr/min, puis refroidi pendant 3 h à -10 °C sous la même pression réduite et la même agitation. Il est ensuite placé à 0 °C pendant une nuit, toujours dans les mêmes conditions de pression réduite et d'agitation, et enfin refroidi à -10 °C.

La solution de filage obtenue est extrudée à travers une filière de filage à 500 trous chacun de 80 µm de diamètre, et injectée directement dans un bain de coagulation composé d'un mélange isopropanol / eau (60 / 40 en volume).

Les paramètres de filage sont par exemple les suivants : température de la solution de filage 0 °C, vitesse de la pompe de transfert 800 trs/min, température du bain de coagulation 20 °C.

Il se forme dans le bain de coagulation des fibres de cellulose, dans lesquelles les nanotubes de carbone sont piégés et bien dispersés.

Les fibres ainsi formées sont entrainées dans un bain de neutralisation, à base d'hydroxyde de potassium KOH, à 20 °C, afin d'éliminer l'acide phosphorique restant sur les fibres, puis dans un bain de lavage à l'eau à 15 °C, avant d'être séchées par de l'air chaud dans un four à 250 °C.

Elles sont ensuite étirées sur des rouleaux chauffants à une température de 160 °C, de manière classique en elle-même.

Les fibres à base de cellulose sont ensuite mises en bobine à une vitesse de bobinage de 12 m/min.

On obtient une fibre multifilaments à base de cellulose, d'un diamètre d'environ 25 µm et de plusieurs mètres de longueur.

Cette fibre continue à base de cellulose présente une résistance comprise entre 10 et 40 cN/tex et un module de Young compris entre 10 et 30 GPa (ces paramètres étant mesurés selon les protocoles décrits dans la norme ISO 2062). Cette fibre continue à base de cellulose peut ensuite être soumise à une étape de stabilisation sous air à une température de l'ordre de 250°C, préalablement à une étape de carbonisation sous azote jusqu'à 1200°C.

Il est obtenu à l'issue de ce procédé une fibre de carbone présentant, à l'état non graphitisé, une résistance à la contrainte supérieure à 1 200 MPa et un module de Young supérieur à 75 GPa (ces paramètres étant mesurés selon les protocoles décrits dans la norme ISO 11566, méthode B).

### Exemple 1 -_papier de bureau

Un procédé de fabrication d'une fibre de carbone conforme à l'invention est mis en œuvre à partir du même produit papetier que celui utilisé dans l'Exemple comparatif 1 ci-dessus, du papier de bureau pour impression et écriture (papier A4 Clairefontaine Clairalpha 80g/m²).

Les feuilles de papiers sont tout d'abord déchiquetées de façon automatisée. Les chiquettes obtenues sont broyées pour former des particules de dimension d'environ 250 µm.

Conformément à l'invention, le papier broyé est ensuite directement dissous dans une solution aqueuse d'acide phosphorique à 85 % (contenant une concentration d'acide phosphorique de 85 % en volume par rapport au volume total de ladite solution aqueuse), dans une quantité de 7 % en poids par rapport au poids total du mélange, pour former une solution de filage.

Il est ajouté à cette solution un émulsifiant non-ionique, tel que le produit commercialisé sous le nom Emulan^{®}, dans une quantité de 0,2 % en poids par rapport au poids de papier broyé contenu dans la solution de filage. Un tel émulsifiant non-ionique facilite avantageusement l'imprégnation de la cellulose du papier recyclé par l'acide phosphorique.

Le mélange est chauffé à 45 °C pendant 15 min sous pression réduite de 100 mbar et sous agitation à 40 tr/min, puis refroidi pendant 3 h à -10 °C sous la même pression réduite et la même agitation. Il est ensuite placé à 0 °C pendant une nuit, toujours dans les mêmes conditions de pression réduite et d'agitation, et enfin refroidi à -10 °C.

Dans une variante du procédé, le papier broyé peut être mélangé, dans la solution d'acide phosphorique, à de la cellulose issue de bois obtenue par un procédé papetier, de plus haut degré de pureté, par exemple dans un rapport en poids broyât de papier / cellulose haute pureté de 20 / 80 ou de 50 / 50.

La solution de filage est extrudée à travers une filière de filage à 500 trous chacun de 80 µm de diamètre, et injectée directement dans un bain de coagulation composé d'un mélange isopropanol / eau (60 / 40 en volume).

Les paramètres de filage sont par exemple les suivants : température de la solution de filage 0 °C, vitesse de la pompe de transfert 600 trs/min, température du bain de coagulation 20 °C.

Il se forme dans le bain de coagulation des fibres de cellulose.

Les fibres ainsi formées sont entrainées dans un bain de neutralisation, à base d'hydroxyde de potassium KOH à 3 % en poids dans de l'eau, à 20 °C, afin d'éliminer l'acide phosphorique restant sur les fibres, puis dans un bain de lavage à l'eau à 15 °C, avant d'être séchées par de l'air chaud dans un four à 250 °C. Elles sont ensuite étirées sur des rouleaux chauffants à une température de 160 °C, de manière classique en elle-même.

Les fibres à base de cellulose sont ensuite mises en bobine à une vitesse de bobinage de 10 m/min.

On obtient une fibre multifilaments à base de cellulose, d'un diamètre d'environ 28 µm et de plusieurs mètres de longueur.

Cette fibre continue à base de cellulose présente une résistance comprise entre 10 et 40 cN/tex et un module de Young compris entre 10 et 40 GPa (ces paramètres étant mesurés selon les protocoles décrits dans la norme ISO 2062). Cette fibre continue à base de cellulose peut ensuite être soumise à une étape de stabilisation sous air à une température de l'ordre de 250°C, préalablement à une étape de carbonisation sous azote jusqu'à 1200°C.

Préalablement à l'étape de carbonisation, la fibre continue à base de cellulose peut être imprégnée d'agents dits de carbonisation, favorisant l'augmentation des propriétés mécaniques de la fibre de carbone finalement obtenue, et du rendement carbone de l'étape de carbonisation.

L'étape de carbonisation peut être suivie par une étape de graphitisation, par chauffage de la fibre jusqu'à une température comprise entre 2000 et 3000°C, sous gaz inerte, pendant une durée comprise entre 1 et 10 min.

Il est obtenu à l'issue de ce procédé une fibre de carbone présentant des propriétés mécaniques particulièrement satisfaisantes, notamment, à l'état non graphitisé, une résistance à la contrainte supérieure à 1 200 MPa et un module de Young supérieur à 75 GPa (ces paramètres étant mesurés selon les protocoles décrits dans la norme ISO 11566, méthode B). Ces propriétés mécaniques sont aussi bonnes que celles des fibres de carbone obtenues dans l'Exemple comparatif 1, dans lequel le broyât de papier a été soumis à un prétraitement avant sa dissolution dans la solution aqueuse d'acide phosphorique.

En outre, sans additifs, la fibre de carbone obtenue selon l'invention présente à 1000°C sous azote un rendement carbone de 15,4 % et un taux d'inorganiques inférieur à 0,007 % (ces paramètres étant mesurés par analyses thermogravimétriques à 10 °C/min sous azote jusqu'à 1000°C puis passage sous air à 1000°C).

Cette fibre de carbone a été obtenue à très bas coût, en comparaison des fibres de carbone formées par les procédés conventionnels proposés par l'art antérieur.

Cette fibre de carbone peut être utilisée pour de nombreuses applications, par exemple pour la fabrication d'articles en matériau composite, dans lesquels lesdites fibres sont dispersées dans une résine organique polymère.

### Exemple 2 - papier essuie-tout

Un procédé de fabrication d'une fibre de carbone selon l'invention est mis en œuvre à partir de papier essuie-tout.

Ce papier est broyé avant d'être dissous dans de l'acide phosphorique (à 85 % en solution aqueuse), dans une quantité en poids de 7 %, par rapport au poids total du mélange.

Il est ajouté à cette solution un émulsifiant non-ionique, tel que le produit commercialisé sous le nom Emulan^{®}, dans une quantité de 0,2 % en poids par rapport au poids de pâte broyée contenue dans la solution de filage.

Le mélange est chauffé à 45 °C pendant 30 min sous pression réduite de 100 mbar et sous agitation à 40 tr/min, puis refroidi à -10 °C sous la même pression réduite et la même agitation pendant une nuit.

La solution de filage obtenue est extrudée à travers une filière de filage à 500 trous chacun de 80 µm de diamètre, et injectée directement dans un bain de coagulation composé d'un mélange isopropanol / eau (60 / 40 en volume).

Les paramètres de filage sont par exemple les suivants : température de la solution de filage 0 °C, vitesse de la pompe de transfert 600 trs/min, température du bain de coagulation 20 °C.

Il se forme des fibres de cellulose dans le bain de coagulation.

Les fibres ainsi formées sont entrainées dans un bain de neutralisation, à base d'hydroxyde de potassium KOH, à 20 °C, afin d'éliminer l'acide phosphorique restant sur les fibres, puis dans un bain de lavage à l'eau à 15 °C, avant d'être séchées par de l'air chaud dans un four à 260 °C.

Elles sont ensuite étirées sur des rouleaux chauffants à une température de 120 °C, de manière classique en elle-même.

Ces fibres de cellulose sont ensuite soumises à une étape de carbonisation, selon le protocole indiqué dans l'exemple 1 ci-avant.

## Revendications

1. Procédé de fabrication d'une fibre de carbone à partir d'un produit manufacturé en papier, **caractérisé en ce qu'**il comprend :
a/ la préparation d'une fibre à base de cellulose, comprenant des étapes successives de :
a1/ broyage dudit produit en papier, pour obtenir un broyât de papier,
a3/ dissolution du broyât obtenu à l'issue de l'étape a1/ directement dans une solution aqueuse d'acide phosphorique, pour former une solution dite de filage,
a4/ à partir de ladite solution de filage, fabrication d'une fibre continue à base de cellulose par un procédé de filage en voie solvant,
a5/ le cas échéant, étirage de la fibre continue à base de cellulose obtenue,
b/ et la carbonisation de ladite fibre continue à base de cellulose pour former une fibre de carbone.

2. Procédé de fabrication d'une fibre de carbone selon la revendication 1, selon lequel la solution de filage est soumise audit procédé de filage en voie solvant sans être soumise à une étape préalable de séchage.

3. Procédé de fabrication d'une fibre de carbone selon l'une des revendications 1 ou 2, selon lequel ladite solution aqueuse d'acide phosphorique contient une concentration d'acide phosphorique comprise entre 75 et 99 % en volume, par rapport au volume total de ladite solution aqueuse.

4. Procédé de fabrication d'une fibre de carbone selon l'une quelconque des revendications 1 à 3, selon lequel, au cours de l'étape a/ de préparation d'une fibre à base de cellulose, la température n'excède pas 45 °C.

5. Procédé de fabrication d'une fibre de carbone selon l'une quelconque des revendications 1 à 4, selon lequel dans l'étape a1/ le broyage est réalisé de sorte à obtenir un broyât formé de particules dont la plus grande dimension est comprise entre 200 et 500 µm.

6. Procédé de fabrication d'une fibre de carbone selon l'une quelconque des revendications 1 à 5, selon lequel ledit produit en papier est formé en papier issu d'une pâte papetière chimique.

7. Procédé de fabrication d'une fibre de carbone selon l'une quelconque des revendications 1 à 6, selon lequel dans l'étape a3/ le broyât est mélangé à de la cellulose purifiée.

8. Procédé de fabrication d'une fibre de carbone selon l'une quelconque des revendications 1 à 7, selon lequel dans l'étape a3/ la concentration en broyât, le cas échéant en mélange de broyât et de cellulose purifiée, dissous dans la solution aqueuse d'acide phosphorique, est comprise entre 1 et 50 % en poids, de préférence entre 5 et 30 % en poids, par rapport au poids total de la solution de filage.

9. Procédé de fabrication d'une fibre de carbone selon l'une quelconque des revendications 1 à 8, selon lequel la solution de filage contient un agent émulsifiant non-ionique, de préférence dans une concentration comprise entre 0,1 et 1 % en poids par rapport au poids de broyât, le cas échéant par rapport au poids du mélange de broyât et de cellulose purifiée, dissous dans ladite solution aqueuse d'acide phosphorique lors de ladite étape a3/.

10. Procédé de fabrication d'une fibre de carbone selon l'une quelconque des revendications 1 à 9, selon lequel une charge carbonée de taille nanométrique, notamment choisie parmi les nanotubes de carbone et le graphène, seuls ou en mélange, est ajoutée à la solution de filage, de préférence dans une concentration comprise entre 1 ppm et 5 % en poids par rapport au poids de broyât, le cas échéant par rapport au poids du mélange de broyât et de cellulose purifiée, dissous dans ladite solution aqueuse d'acide phosphorique lors de ladite étape a3/.

11. Procédé de fabrication d'une fibre de carbone selon l'une quelconque des revendications 1 à 10, comprenant une étape de formation d'une nappe de fibres à base de cellulose à partir d'une pluralité de fibres continues à base de cellulose obtenues à l'étape a4/ ou a5/, et selon lequel l'étape b/ de carbonisation de ladite fibre continue à base de cellulose est réalisée par carbonisation de ladite nappe de fibres continues à base de cellulose, pour former une nappe à base de fibres de carbone.

12. Procédé de fabrication d'un article en matériau composite à base de fibres de carbone distribuées dans une matrice de résine organique polymère, **caractérisé en ce qu'**il comprend :
- la mise en œuvre d'un procédé de fabrication d'une fibre de carbone selon l'une quelconque des revendications 1 à 10 et la formation d'une nappe de fibres de carbone à partir d'une pluralité des fibres de carbone obtenues, ou la mise en œuvre d'un procédé de fabrication d'une fibre de carbone selon la revendication 11 pour former une nappe à base de fibres de carbone,
- et la fabrication dudit article en matériau composite à partir d'une pluralité de nappes de fibres de carbone ainsi obtenues.

## Patentansprüche

1. Verfahren zur Herstellung einer Kohlenstofffaser aus einem Papierprodukterzeugnis, **dadurch gekennzeichnet, dass** es Folgendes umfasst:
a/ Vorbereiten einer Faser auf Zellulosebasis, umfassend die folgenden aufeinanderfolgenden Schritte:
a1/ Zerkleinern des Papierprodukts, um ein Papiermahlgut zu erhalten,
a3/ Auflösen des nach Schritt a1/erhaltenen Mahlguts direkt in einer wässrigen Phosphorsäurelösung, um eine sogenannte Spinnlösung zu bilden,
a4/ Herstellen einer Endlosfaser auf Zellulosebasis aus der Spinnlösung durch ein Spinnverfahren auf Lösungsmittelbasis,
a5/ gegebenenfalls Strecken der erhaltenen Endlosfaser auf Zellulosebasis,
b/ und das Karbonisieren der Endlosfaser auf Zellulosebasis, um eine Kohlenstofffaser zu bilden.

2. Verfahren zur Herstellung einer Kohlenstofffaser nach Anspruch 1, wobei die Spinnlösung dem Spinnverfahren auf Lösungsmittelbasis unterzogen wird, ohne einem vorherigen Trocknungsschritt unterzogen zu werden.

3. Verfahren zur Herstellung einer Kohlenstofffaser nach einem der Ansprüche 1 oder 2, wobei die wässrige Phosphorsäurelösung eine Phosphorsäurekonzentration zwischen 75 und 99 Vol.-%, bezogen auf das Gesamtvolumen der wässrigen Lösung, enthält.

4. Verfahren zur Herstellung einer Kohlenstofffaser nach einem der Ansprüche 1 bis 3, wobei während des Schritts a/ des Vorbereitens einer Faser auf Zellulosebasis die Temperatur von 45 °C nicht überschritten wird.

5. Verfahren zur Herstellung einer Kohlenstofffaser nach einem der Ansprüche 1 bis 4, wobei in Schritt a1/ das Zermahlen so durchgeführt wird, dass ein Mahlgut erhalten wird, das aus Partikeln gebildet wird, deren größte Abmessung zwischen 200 und 500 µm liegt.

6. Verfahren zur Herstellung einer Kohlenstofffaser nach einem der Ansprüche 1 bis 5, wobei das Papierprodukt aus Papier gebildet wird, das aus einem chemischen Papierzellstoff stammt.

7. Verfahren zur Herstellung einer Kohlenstofffaser nach einem der Ansprüche 1 bis 6, wobei in Schritt a3/ das Mahlgut mit gereinigter Zellulose vermischt wird.

8. Verfahren zur Herstellung einer Kohlenstofffaser nach einem der Ansprüche 1 bis 7, wobei in Schritt a3/ die Konzentration des in der wässrigen Phosphorsäurelösung gelösten Mahlguts, gegebenenfalls der Mischung aus Mahlgut und gereinigter Zellulose, zwischen 1 und 50 Gew.-%, vorzugsweise zwischen 5 und 30 Gew.-%, bezogen auf das Gesamtgewicht der Spinnlösung, liegt.

9. Verfahren zur Herstellung einer Kohlenstofffaser nach einem der Ansprüche 1 bis 8, wobei die Spinnlösung ein nichtionisches Emulgatormittel enthält, vorzugsweise in einer Konzentration zwischen 0,1 und 1 Gew.-%, bezogen auf das Gewicht des Mahlguts, gegebenenfalls bezogen auf das Gewicht der Mischung aus Mahlgut und gereinigter Zellulose, die in der wässrigen Phosphorsäurelösung während des Schritts a3/ aufgelöst wurde.

10. Verfahren zur Herstellung einer Kohlenstofffaser nach einem der Ansprüche 1 bis 9, wobei der Spinnlösung ein kohlenstoffhaltiger Füllstoff in Nanogrößenbereich, insbesondere ausgewählt aus Kohlenstoffnanoröhrchen und Graphen, allein oder gemischt, hinzugefügt wird, vorzugsweise in einer Konzentration zwischen 1 ppm und 5 Gew.-%, bezogen auf das Gewicht des Mahlguts, gegebenenfalls bezogen auf das Gewicht der Mischung aus Mahlgut und gereinigter Zellulose, die in der wässrigen Phosphorsäurelösung in Schritt a3/ aufgelöst wurde.

11. Verfahren zur Herstellung einer Kohlenstofffaser nach einem der Ansprüche 1 bis 10, umfassend einen Schritt des Bildens eines Vlieses aus Fasern auf Zellulosebasis aus einer Vielzahl von in Schritt a4/oder a5/ erhaltenen Endlosfasern auf Zellulosebasis, und wobei der Schritt b/ des Karbonisierens der Endlosfaser auf Zellulosebasis durch das Karbonisieren des Vlieses aus Endlosfasern auf Zellulosebasis durchgeführt wird, um ein Vlies auf Kohlenstofffaserbasis zu bilden.

12. Verfahren zur Herstellung eines Artikels aus einem Verbundmaterial auf Basis von Kohlenstofffasern, die in einer Matrix aus organischem Polymerharz verteilt sind, **dadurch gekennzeichnet, dass** es Folgendes umfasst:
- Durchführen eines Verfahrens zur Herstellung einer Kohlenstofffaser nach einem der Ansprüche 1 bis 10 und Bilden eines Vlieses aus Kohlenstofffasern aus einer Vielzahl der erhaltenen Kohlenstofffasern oder Durchführen eines Verfahrens zur Herstellung einer Kohlenstofffaser nach Anspruch 11, um ein Vlies auf Basis von Kohlenstofffasern zu bilden,
- und Herstellen des Artikels aus Verbundmaterial aus einer Vielzahl von derart erhaltenen Kohlenstofffaservliesen.

## Claims

1. Method for manufacturing a carbon fibre from a manufactured paper product, **characterised in that** it comprises:
a/ preparing a cellulose-based fibre, comprising successive steps of:
a1/ grinding said paper product to obtain a ground paper material,
a3/ directly dissolving the ground material obtained at the end of step a1/ in an aqueous phosphoric acid solution, to form a so-called spinning solution,
a4/ from said spinning solution, manufacturing a cellulose-based continuous fibre by implementing a solvent spinning process,
a5/ optionally, drawing the resulting cellulose-based continuous fibre,
b/ and carbonising said cellulose-based continuous fibre to form a carbon fibre.

2. Method for manufacturing a carbon fibre according to claim 1, wherein the spinning solution is subjected to said solvent spinning process without being subjected to a prior drying step.

3. Method for manufacturing a carbon fibre according to one of claims 1 or 2, wherein said aqueous phosphoric acid solution contains a concentration of phosphoric acid comprised between 75 and 99 vol%, based on the total volume of said aqueous solution.

4. Method for manufacturing a carbon fibre according to any one of claims 1 to 3, wherein, in step a/ of preparing a cellulose-based fibre, the temperature does not exceed 45°C.

5. Method for manufacturing a carbon fibre according to any one of claims 1 to 4, wherein, in step a1/ the grinding is carried out in such a way as to obtain a ground material formed of particles, the largest dimension whereof is comprised between 200 and 500 µm.

6. Method for manufacturing a carbon fibre according to any one of claims 1 to 5, wherein said paper product is formed of paper derived from a chemical papermaking pulp.

7. Method for manufacturing a carbon fibre according to any one of claims 1 to 6, wherein, in step a3/ the ground material is mixed with purified cellulose.

8. Method for manufacturing a carbon fibre according to any one of claims 1 to 7, wherein, in step a3/ the concentration of ground material, or where appropriate of the mixture of ground material and purified cellulose, dissolved in the aqueous phosphoric acid solution, is comprised between 1 and 50 wt%, preferably between 5 and 30 wt%, based on the total weight of the spinning solution.

9. Method for manufacturing a carbon fibre according to any one of claims 1 to 8, wherein the spinning solution contains a non-ionic emulsifying agent, preferably at a concentration comprised between 0.1 and 1 wt%, based on the weight of ground material, where appropriate based on the weight of the mixture of ground material and purified cellulose, dissolved in said aqueous phosphoric acid solution in said step a3/.

10. Method for manufacturing a carbon fibre according to any one of claims 1 to 9, wherein a nanosized carbonaceous filler, in particular chosen from among carbon nanotubes and graphene, alone or mixed together, is added to the spinning solution, preferably at a concentration comprised between 1 ppm and 5 wt%, based on the weight of the ground material, where appropriate based on the weight of the mixture of ground material and purified cellulose, dissolved in said aqueous phosphoric acid solution in said step a3/.

11. Method for manufacturing a carbon fibre according to any one of claims 1 to 10, comprising a step of forming a web of cellulose-based fibres from a plurality of cellulose-based continuous fibres obtained in step a4/ or a5/, and wherein step b/ of carbonising said cellulose-based continuous fibre is carried out by carbonising said web of cellulose-based continuous fibres to form a carbon fibre-based web.

12. Method for manufacturing an article made of composite material containing carbon fibres distributed in an organic polymer resin matrix, **characterised in that** it comprises:
- implementing a method for manufacturing a carbon fibre according to any one of claims 1 to 10 and forming a carbon fibre web from a plurality of the carbon fibres obtained, or implementing a method for manufacturing a carbon fibre according to claim 11 to form a carbon fibre-based web,
- and manufacturing said article made of composite material from a plurality of carbon fibre webs thus obtained.
